# EUROPEAN PATENT APPLICATION

(11) **EP 4 632 624 A1**
(43) Date of publication of application: **15.10.2025**
(21) Application number: 23918466.6
(22) Date of filing: 23.08.2023
(51) Int. Cl.: G06K 7/10, G07B 15/00

(54) **RFID SYSTEM**

(30) Priority: 24.01.2023 JP 2023008771
(71) Applicant: Takaya Corporation, Ihara-shi, Okayama 715-0024 (JP)
(72) Inventor: MIYAKE, Kodai, Ibara-shi, Okayama 715-0022 (JP); SUEDA, Michinori, Ibara-shi, Okayama 715-0022 (JP); SAEKI, Noritsugu, Ibara-shi, Okayama 715-0022 (JP)
(74) Representative: Serjeants LLP
(86) International application number: PCT/JP2023/030324
(87) International publication number: WO 2024/157506

(57) **Abstract**

An objective is to provide an RFID system that can reduce misreading of RFID tags by a simple technique. An RFID system includes, for reading a RFID tag, an RFID reader/writer, an RFID antenna connected to the RFID reader/writer, and a controller that controls the RFID reader/writer. The RFID antenna includes one or more antenna sets including a first antenna member and a second antenna member. The first and second antenna members are arranged adjacent to each other in the passage direction of an RFID tag with a diverging angle difference that causes their boresight directions to diverge from each other anteriorly. The RFID reader/writer processes detection signals retrieved from the RFID tag while selectively operating the first and second antenna members, and determines whether the RFID tag has passed beside the RFID antenna based on temporal changes in the detection signals.

## Description

### TECHNICAL FIELD

The present invention relates to RFID systems that detect the presence of RFID tags attached to products or the like, and more specifically, to RFID systems that detect the passage of RFID tags by selectively operating multiple antenna members.

### BACKGROUND

There are RFID systems that incorporate an RFID antenna into a gate in order to detect RFID tags passing in front of the gate or between gates. This type of RFID system may misread RFID tags located far away due to reflection or multipath effects, resulting in false alarms. To address this phenomenon, there is known an anti-misreading technology which uses radio wave reception strength and phase information to detect the passage of an RFID tag in front of the gate based on data processing (patent document 1).

However, since the above-described method using phase information involves a considerably complex algorithmic process, systems with slow arithmetic processors may not be able to perform the process in time. While systems with high-speed arithmetic processors may reduce misreadings, there is a problem that improvements in accuracy do not justify the cost of such systems.

### PRIOR ART LITERATURE

### [Patent Document]

[Patent Document 1] JP 2013-37633 A

### SUMMARY

The present invention has been developed in light of the aforementioned background art. One objective of the present invention is to provide RFID systems that can reduce erroneous RFID tag readings using a simple technique.

To accomplish the aforementioned objective, an RFID system according to the present invention includes, for reading a RFID tag, an RFID reader/writer, an RFID antenna connected to the RFID reader/writer, and a controller that controls the RFID reader/writer. The RFID antenna includes one or more antenna sets including a first antenna member and a second antenna member. The first and second antenna members are arranged adjacent to each other in the passage direction of an RFID tag with a diverging angle difference that causes their boresight directions to diverge from each other anteriorly. The RFID reader/writer processes detection signals retrieved from the RFID tag while selectively operating the first and second antenna members, and determines whether the RFID tag has passed beside the RFID antenna based on temporal changes in the detection signals.

The aforementioned RFID system performs reading by selectively operating the first and second antenna members, which are arranged with a diverging angle difference that causes their boresight directions to diverge from each other anteriorly. Accordingly, the aforementioned RFID system ensures a sufficient time difference for temporal changes in signal intensity obtained from the two antenna members, even when these antenna members are placed close together. This improves the accuracy of the process of detecting RFID tag passages based on the temporal changes in the detection signals obtained by the two antenna members, ensuring the reliability of the passage detection. It should be noted that placing the two antenna members close together allows the RFID antenna to be compact, which makes the entire apparatus or gate compact.

### BRIEF DESCRIPTION OF THE DRAWINGS

FIG. 1 is a conceptual perspective view illustrating an RFID system, according to a first embodiment.
FIG. 2 is a block diagram illustrating the circuit configuration of an RFID system.
FIG. 3A is a plan view illustrating an antenna set of a specific example, and FIG. 3B shows a detection pattern when an RFID tag moves in the passage direction.
FIG. 4A is a plan view illustrating an antenna set of a comparative example, and FIG. 4B shows a detection pattern when an RFID tag moves in the passage direction.
FIG. 5 is a diagram illustrating one example of a detection operation of an RFID system.
FIG. 6 is a chart illustrating a modified example of the detection operation.
FIG. 7 is a diagram illustrating an RFID system, according to a second embodiment.
FIG. 8 is a diagram illustrating an RFID system, according to a third embodiment.
FIG. 9 is a plan view illustrating a modified example that allows for angle adjustment of an antenna set.

### DETAILED DESCRIPTION

### [First Embodiment]

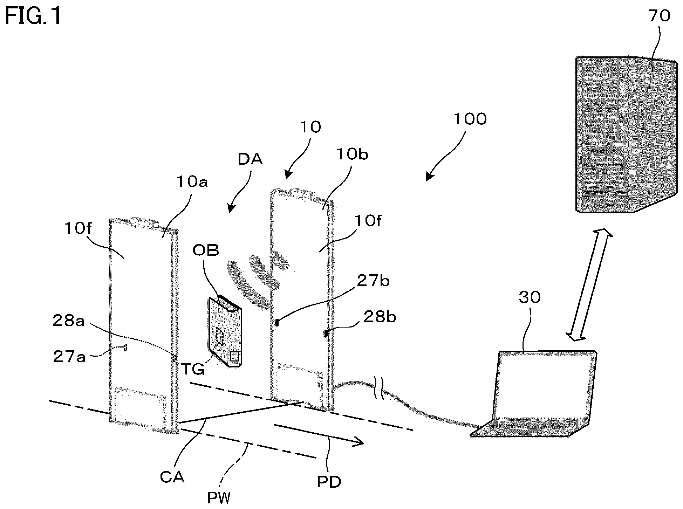

A description is given below of an RFID system according to a first embodiment of the present invention with reference to FIG. 1.

An RFID system 100 includes a gate device 10 arranged on either side of a passageway PW, and a higher-level management device 30 that manages the gate device 10. The gate device 10 includes a pair of gate members, namely a main gate 10a and a subgate 10b. The area above the passageway PW between the main gate 10a and the subgate 10b is designated as a reading area DA, which is a monitored zone for detecting the passage of an RFID tag TG attached to an object OB. The main gate 10a is directly connected to the higher-level management device 30, and the subgate 10b is connected to the main gate 10a via a cable CA.

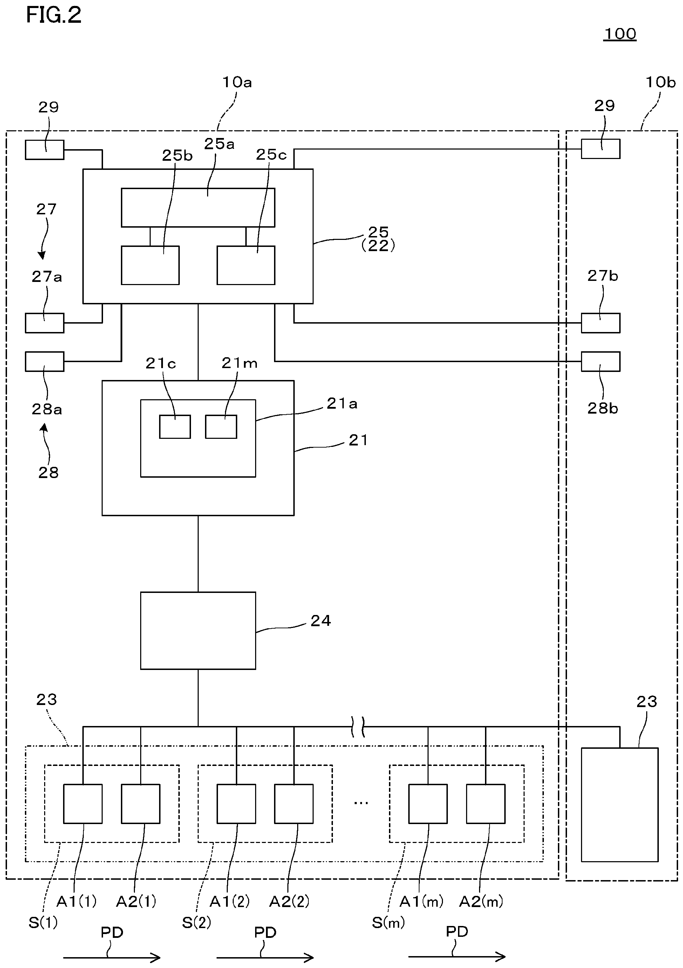

FIG. 2 is a block diagram illustrating the RFID system 100. The main gate 10a includes an RFID reader/writer 21, an RFID antenna 23 indirectly connected to the RFID reader/writer 21, an antenna switcher 24 coupled between the RFID reader/writer 21 and the RFID antenna 23, and a control device 25 that administers overall operation. The RFID reader/writer 21, the RFID antenna 23, the antenna switcher 24, and the control device 25 are housed in a single housing, that is, a case 10f. In this case, the case 10f and its interior components can be used as a gate member. The main gate 10a further includes a first infrared light source 27a, a second infrared light source 28a, and an alarm unit 29, which operate under the control of the control device 25. The subgate 10b includes an RFID antenna 23, and further includes a first infrared sensor 27b, a second infrared sensor 28b, and an alarm unit 29.

The RFID reader/writer 21 includes a control circuit 21a incorporating a CPU 21c and a memory 21m, and operates based on an installed program. The RFID reader/writer 21 supplies power to the RFID antenna 23, causing the RFID antenna 23 to emit radio waves within a predetermined band (specifically, for example, radio waves of 860 to 960 MHz in the UHF band), and receives response waves from the RFID tag TG passing through the passageway PW to identify the RFID tag TG. In other words, the RFID reader/writer 21 processes detection signals from the RFID tag TG, and determines whether the RFID tag TG has passed beside the RFID antenna 23 based on temporal changes in the detection signals.

In the illustrated example, the RFID antenna 23, which is incorporated into the main gate 10a, includes a number of antenna sets S(1), S(2), ... , and S(m), where m is a natural number greater than or equal to three. The antenna sets S(1), S(2), ..., and S(m) are arranged beside the reading area DA (see FIG. 1). The RFID antenna 23 includes multiple antenna sets S(1), S(2), ... beside the reading area DA, and the RFID reader/writer is connected to these multiple antenna sets. This configuration allows for an increase in the number of the antenna sets S(1), S(2), ..., thereby facilitating enlargement of the reading area. Additionally, this configuration enables signal determination processing based on the signals detected by the desired number of antenna sets S(1), S(2), ..., thereby enhancing the passage detection reliability.

The first antenna set S(1) includes a first antenna member A1(1) and a second antenna member A2(1), the second antenna set S(2) includes a first antenna member A1(2) and a second antenna member A2(2), and the m-th antenna set S(m) includes a first antenna member A1(m) and a second antenna member A2(m), which are arranged along the passing direction PD. The first antenna set S(1) is arranged, for example, at the bottom of the reading area DA (see FIG. 1), the second antenna member A2(2) is arranged, for example, at the top of the reading area DA, and the m-th antenna set S(m) is arranged in the middle of the reading area DA. Each antenna set S(k), where k is any natural number from 1 to m, includes a first antenna member A1(k) arranged along the passing direction PD and a second antenna member A2(k) arranged along the passing direction PD. Each antenna set (S(k))-that is, the first antenna (A1(k)) and the second antenna (A2(k))-is connected to an RFID reader/writer 21. Each antenna set S(k) operates at a different timing under the control of the RFID reader/writer 21. Additionally, within each antenna set S(k), the first antenna member A1(k) and the second antenna member A2(k) are selectively operated by the RFID reader/writer 21 to operate at different timings. As described, operating the antenna members A1(k) and A2(k) at different timings makes it possible to clearly identify and specify which of the antenna members A1(k) and A2(k) the RFID tag TG has responded to, while avoiding the problem of interference.

The RFID antenna 23 installed in the subgate 10b is configured similarly to the RFID antenna 23 installed in the main gate 10a.

The antenna switcher 24 operates under the control of the RFID reader/writer 21 and selects a particular antenna member from the plurality of first antenna members A1(k) and the plurality of second antenna members A2(k) to connect to the RFID reader/writer 21. In a specific example, in the particular antenna set S(k), the first antenna member A1(k) is first connected to the RFID reader/writer 21, and the second antenna member A2(k) is then connected to the RFID reader/writer 21. The RFID antenna 23 incorporated in the subgate 10b is connected to the antenna switcher 24 incorporated in the main gate 10a, and operates at a different timing from the RFID antenna 23 incorporated in the main gate 10a. Providing the antenna switcher 24 between the RFID reader/writer 21 and the RFID antenna 23 makes it possible to increase the number of antenna sets S(1), S(2), ... while preventing an increase in the number of RFID reader/writers 21.

The control device 25 is, for example, a microcomputer-based controller 22. The control device 25 includes a CPU 25a, a memory 25b, and a communication circuit 25c, and operates based on an installed program. The control device 25 manages the operating status of the RFID reader/writer 21, the infrared light sources 27a, 28a, the infrared sensors 27b, 28b, and the alarm unit 29. The control device 25 does not need to be separate from the RFID reader/writer 21 and may be incorporated into the RFID reader/writer 21 as a function of the control circuit 21a of the RFID reader/writer 21. In this scenario, the RFID reader/writer 21 includes a narrow-sense RFID reader/writer and the controller 22. The control device 25 may be a function performed by the computer of the higher-level management device 30 shown in FIG. 1. In this scenario, the RFID reader/writer 21 is managed directly by the higher-level management device 30.

The first infrared light source 27a and the second infrared light source 28a are fixed to the case 10f, which is the housing of the main gate 10a shown in FIG. 1, and the first infrared sensor 27b and the second infrared sensor 28b are fixed to the case 10f of the subgate 10b.

The first infrared light source 27a operates under the control of the control device 25 or the RFID reader/writer 21, and emits light continuously or periodically. The first infrared sensor 27b detects infrared rays emitted from the first infrared light source 27a. The control device 25 or the RFID reader/writer 21 detects the passage of a person or the like based on the detection result of the first infrared sensor 27b. In the above, the first infrared light source 27a and the first infrared sensor 27b function as a first human detection infrared module 27, which detects a person passing through the reading area DA. The second infrared light source 28a operates under the control of the control device 25 or the RFID reader/writer 21, and emits light continuously or periodically. The second infrared sensor 28b detects infrared rays emitted from the first infrared light source 28a. The control device 25 or the RFID reader/writer 21 detects the passage of a person or the like based on the detection result of the second infrared sensor 28b. In the above, the second infrared light source 28a and the second infrared sensor 28b function as a second human detection infrared module 28 that detects a person passing through the reading area DA. When the passage of a relatively large object is first detected by the first human detection infrared module 27 and then by the second human detection infrared module 28, it is determined that a human-like object has passed ahead through the passageway PW. In other words, the control device 25 or the RFID reader/writer 21 makes a determination based on a combination of the passage detection using the RFID tag TG and the passage detection by the human detection infrared modules 27 and 28. Specifically, when detecting a passage using the RFID tag TG and also detecting a passage using the human detection infrared modules 27, 28, the control device 25 or the RFID reader/writer 21 determines that a person carrying the RFID tag TG has passed through the reading area DA. In this case, the reliability of the determination can be improved by secondarily using the passage detection of the human detection infrared modules 27 and 28.

The alarm unit 29 includes a speaker and a lamp. When the control device 25 or the RFID reader/writer 21 determines that an RFID tag TG is present, the alarm unit 29 issues an alarm regarding the detection of the RFID tag TG in response to a command from the control device 25 or the RFID reader/writer.

The higher-level management device 30 shown in FIG. 1 is connected to a server 70 that has a database via a communication network. The server 70 is a device external to the RFID system 100.

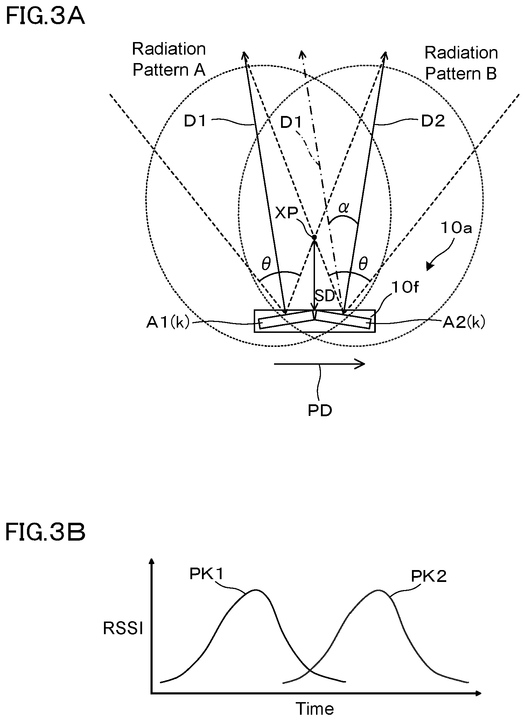

FIG. 3A is a plan view illustrating an antenna set S(k) in a specific example. The housing of the main gate 10a, i.e., the case 10f, accommodates therein the first antenna member A1(k) and the second antenna member A2(k) as the antenna set S(k), wherein the first antenna member A1(k) and the second antenna member A2(k) are arranged along the passing direction PD. The first antenna member A1(k) and the second antenna member A2(k) are arranged adjacent to each other in the passing direction PD of the RFID tag TG, and are arranged with a diverging angle difference α that causes the boresight direction D1 of the first antenna member A1(k) and the boresight direction D2 of the second antenna member A2(k) to diverge from each other anteriorly. More specifically, the boresight direction D1 of the first antenna member A1(k) is inclined counterclockwise with respect to the front direction, and the boresight direction D2 of the second antenna member A2(k) is inclined clockwise with respect to the front direction. The diverging angle difference α is adjusted to reduce the partial overlap between the sensing area of the first antenna member A1(k) and the sensing area of the second antenna member A2(k) in the reading area DA. Excessive separation between the sensing area of the first antenna member A1(k) and the sensing area of the second antenna member A2(k) due to a large diverging angle difference α increases the thickness of the RFID antenna 23 and makes it difficult to detect an RFID tag TG moving from in front of the first antenna member A1(k) to in front of the second antenna member A2(k) with a time difference that approximately corresponds to the travel distance, while also making it difficult to obtain a sufficiently strong detection signal. The degree of separation between the first antenna member A1(k) and the second antenna member A2(k) can be measured using a sensitivity separation distance SD as a scale. For a cross point XP between the half-value angle θ of the radiation characteristics of the first antenna member A1(k) and the half-value angle θ of the radiation characteristics of the second antenna member A2(k), the sensitivity separation distance SD is given as the distance between the antenna set S(k) and the cross point XP.

FIG. 3B shows the detection pattern for the arrangement of the first antenna member A1(k) and the second antenna member A2(k) shown in FIG. 3A when the RFID tag TG moves in the passing direction PD along the passageway PW. The detection peak PK2 of the second antenna member A2(k) is detected with a delay after the detection peak PK1 of the first antenna member A1(k), and the two detection peaks PK1 and PK2 are sufficiently separated along the time axis. This provides a sufficient time difference for the temporal changes in signal strength obtained from these antenna members A1(k) and A2(k).

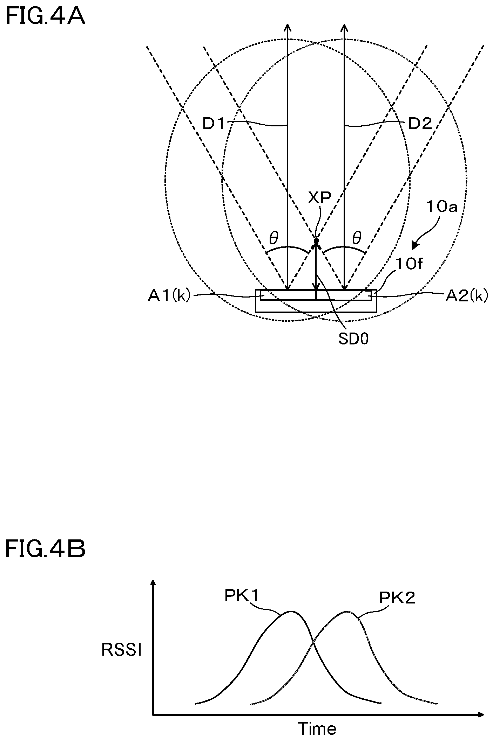

FIG. 4A is a plan view illustrating an antenna set S(k) of a comparative example. This configuration corresponds to a standard state in which the first antenna member A1(k) and the second antenna member A2(k) are arranged adjacent to each other in the passing direction PD of the RFID tag TG with their boresight directions oriented in the same direction. In the standard state, the boresight direction D1 of the first antenna member A1(k) and the boresight direction D2 of the second antenna member A2(k) are set parallel, resulting in a diverging angle difference α of zero. Using the sensitivity separation distance SD0 for the case where the boresight direction D1 of the first antenna member A1(k) and the boresight direction D2 of the second antenna member A2(k) are parallel as shown in FIG. 4A as a reference, the sensitivity separation distance SD for the state in which the boresight direction D1 of the first antenna member A1(k) and the boresight direction D2 of the second antenna member A2(k) diverge from each other as shown in FIG. 3A is approximately 30% larger than the sensitivity separation distance SD0, which corresponds to the standard state. In other words, SD ≈ 1.3 × SD0. Increasing the sensitivity separation distance SD larger by approximately 20% or more than the sensitivity separation distance SD0 of the comparative example prevents the overlapping area between the sensing area of the first antenna member A1(k) and the sensing area of the second antenna member A2(k) from being excessively large. Meanwhile, increasing the sensitivity separation distance SD by approximately 70% or less than the sensitivity separation distance SD0 in the comparison example avoids large timing differences and processing delays caused by an excessive separation between the sensing areas of the first antenna member A1(k) and the second antenna member A2(k).

FIG. 4B shows the detection pattern for the arrangement of the first antenna member A1(k) and the second antenna member A2(k) shown in FIG. 4A when the RFID tag TG moves in the passing direction PD along the passageway PW. Although the detection peak PK2 of the second antenna member A2(k) is detected with a delay after the detection peak PK1 of the first antenna member A1(k), the two detection peaks PK1 and PK2 are not sufficiently separated along the time axis, resulting in an insufficient time difference regarding the temporal changes in the strength of the signals obtained from these two antenna members A1(k) and A2(k).

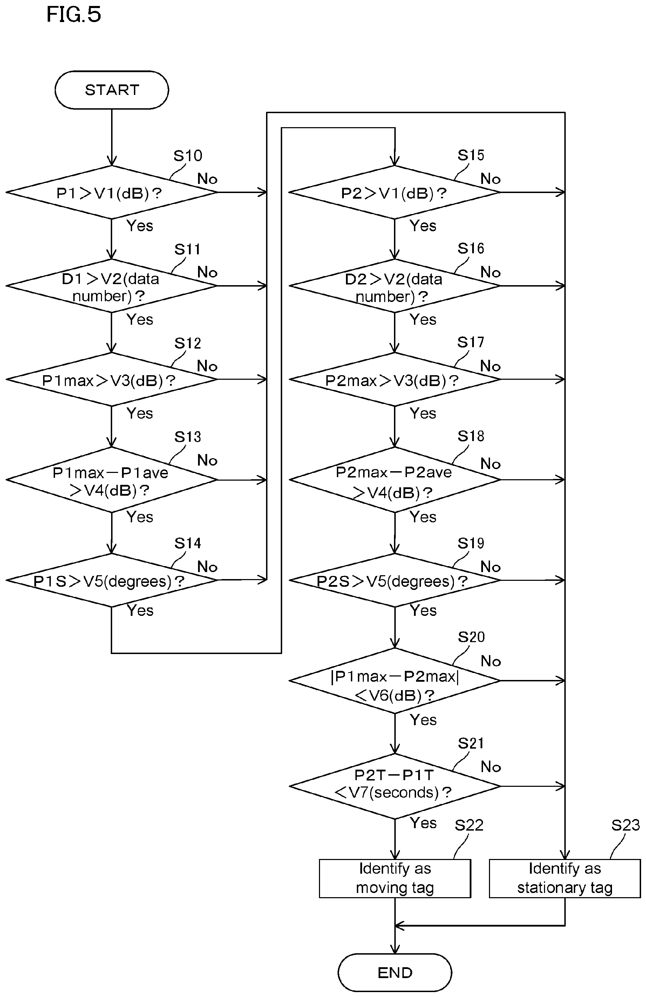

FIG. 5 is a diagram illustrating one example of the determination operation in the RFID system 100. The CPU 21c of the RFID reader/writer 21 determines whether the signal intensity P1 of a series of responses from a specific RFID tag TG obtained using the first antenna member A1(k) exceeds a predetermined threshold value V1 stored in the memory 21m (step S10). Subsequently, the CPU 21c determines whether the number of data points D1 with increasing signal intensity P1 for the series of responses from the specific RFID tag TG obtained using the first antenna member A1(k) exceeds a predetermined threshold V2 stored in the memory 21m (step S11). Subsequently, the CPU 21c determines whether the peak value P1max in the temporal change characteristics exceeds a predetermined threshold value V3 stored in the memory 21m through a comprehensive evaluation of the temporal change characteristics of the signal intensity P1 for the series of responses obtained from the specific RFID tag TG using the first antenna member A1(k) (step S12). Subsequently, the CPU 21c determines whether the difference between the peak value P1max and the average value P1ave in the temporal change characteristics exceeds a predetermined threshold value V4 stored in the memory 21m through a comprehensive evaluation of the temporal change characteristics of the signal intensity P1 for the series of responses obtained from the specific RFID tag TG using the first antenna member A1(k) (step S13). Subsequently, the CPU 21c determines whether the peakedness P1S of the temporal change characteristics exceeds a predetermined threshold value V5 stored in the memory 21m through a comprehensive evaluation of the temporal change characteristics of the signal intensity P1 for the series of responses obtained from the specific RFID tag TG using the first antenna member A1(k)(step S14). The temporal change characteristics of the signal intensity P1 may be represented by a line graph connecting the detection points with line segments, or may be represented by an approximation in which a curve is fitted to the detection points. The peakedness P1S refers to the increase in the signal intensity P1 per unit time, measured at the time point when the rate of increase in the temporal change characteristics is at its maximum.

If the determination in the above steps S10 to S14 is affirmative, then the CPU 21c of the RFID reader/writer 21 recognizes that the detection RFID tag TG has been detected by the first antenna member A1(k) with a predetermined degree of reliability or higher, and determines whether the signal intensity P2 of the series of responses obtained from the specific RFID tag TG using the second antenna member A2(k) exceeds the predetermined threshold value V1 stored in the memory 21m (step S15). Subsequently, the CPU 21c determines whether the number of data points D2 with increasing signal intensity P2 for the series of responses from the specific RFID tag TG obtained using the second antenna member A2(k) exceeds the predetermined threshold V2 stored in the memory 21m (step S16). Subsequently, the CPU 21c determines whether the peak value P2max in the temporal change characteristics exceeds the predetermined threshold value V3 stored in the memory 21m through a comprehensive evaluation of the temporal change characteristics of the signal intensity P2 for the series of responses obtained from the specific RFID tag TG using the first antenna member A2(k) (step S17). Subsequently, the CPU 21c determines whether the difference between the peak value P2max and the average value P2ave in the temporal change characteristics exceeds the predetermined threshold value V4 stored in the memory 21m through a comprehensive evaluation of the temporal change characteristics of the signal intensity P2 for the series of responses received from the specific RFID tag TG obtained using the first antenna member A2(k) (step S18). Subsequently, the CPU 21c determines whether the peakedness P2S of the temporal change characteristics exceeds the predetermined threshold value V5 stored in the memory 21m through a comprehensive evaluation of the temporal change characteristics of the signal intensity P2 for the series of responses obtained from the specific RFID tag TG using the first antenna member A2(k) (step S19).

If the determination in the above steps S15 to S19 is affirmative, the CPU 21c of the RFID reader/writer 21 recognizes that the detection RFID tag TG has been detected by the second antenna member A2(k) with a predetermined degree of reliability or higher, and performs a comprehensive determination. Specifically, the CPU 21c determines whether the absolute value of the difference between the peak value P1max in the temporal change characteristics for the series of responses obtained from the specific RFID tag TG using the first antenna member A1(k) and the peak value P2max in the temporal change characteristics for the series of responses obtained from the specific RFID tag TG using the second antenna member A2(k) exceeds a predetermined threshold value V6 stored in the memory 21m (step S20). Additionally, the CPU 21c determines whether the difference between the occurrence time P1T of the peak value P1max in the temporal change characteristics obtained using the first antenna member A1(k) and the occurrence time P2T of the peak value P2max in the temporal change characteristics obtained using the second antenna member A2(k) exceeds a predetermined threshold value V6 stored in the memory 21m (step S21).

If the above step S20 determines that the difference in peak values |P1max-P2max| is smaller than the predetermined threshold value V6 and the above step S21 determines that the difference in peak occurrence times P2T-P1T is smaller than the threshold value V7, then the CPU 21c of the RFID reader/writer 21 assumes that the same RFID tag TG has been detected with sufficient reliability and determines that the detected RFID tag TG is a moving tag, and that the RFID tag TG has passed through the reading area DA, which functions as a gate (step S22). If the above step S20 determines the difference in peak values |P1max-P2max| is greater than or equal to the predetermined threshold value V6 (No in step S20), or if the above step S21 determines the difference in peak occurrence times P2T-P1T is greater than or equal to the threshold value V7 (No in step S21), then the CPU 21c of the RFID reader/writer 21 determines that the detected RFID tag TG is a stationary tag and that the RFID tag TG has not passed through the reading area DA, which functions as the gate (step S23).

Performing the determinations in the above steps S10 to S14 by comparing the signal intensity P1, the number of data points D1 exhibiting the increase, the peak value P1max, the peak average difference P1max-P1ave (the difference between the peak value P1max and the average value P1ave), and the peakedness P1S with the predetermined thresholds is equivalent to a process of extracting temporal changes in signal intensity from the detection signals and performing filter processing on the signal intensity with respect to the passage characteristics, including the signal intensity and the peak index. Correspondingly, performing the determinations in the above steps S15 to S19 by comparing the signal intensity P2, the number of data points D2 exhibiting the increase, the peak value P2max, the peak average difference P2max-P2ave (the difference between the peak value P2max and the average value P2ave), and the peakedness P2S with the predetermined thresholds is equivalent to a process of extracting temporal changes in signal intensity and performing filter processing on the signal intensity with respect to the passage characteristics, including the signal intensity and the peak index. Furthermore, evaluating the difference between the peak occurrence times P2T-P1T and the difference between the peak values |P1max-P2max| is also equivalent to performing filtering. As described, by performing filtering regarding the passage characteristics including the signal intensity and the peak index, it is possible to easily improve the reliability of the subsequent signal determination processing.

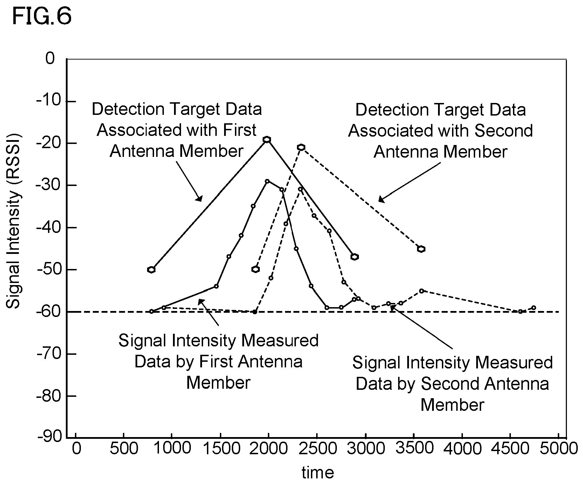

FIG. 6 is a diagram illustrating a modified example of the determination operation. In the chart, the temporal change characteristics of the signal intensity, which are a series of responses from a specific RFID tag TG obtained using the first antenna member A1(k), correspond to actual measured data including 12 measurement points. Meanwhile, the temporal change characteristics of the signal intensity, which are a series of responses from the specific RFID tag TG obtained using the second antenna member A2(k) correspond to actual measured data including 14 measurement points, which is stored data. The actual measured data is decimated for simplification to facilitate processing, and detection target data with fewer data points is used for passage detection of the specific RFID tag TG. In other words, during the filter processing, the RFID reader/writer 21 reduces the number of the stored signal intensity data to a number of data points that ensures the reliability of the filter processing. Specifically, the detection target data for the first antenna member A1(k) and the second antenna member A2(k) are obtained by leaving only three points: the start point, the maximum point, and the end point, from the waveform, i.e., the temporal change characteristics. For ease of illustration, the detection target data is shown shifted upward in relation to the intensity in the chart. As described, using the detection target data with fewer data points, which is simplified by decimation, enables high-speed and efficient signal determination processing.

While the above description states that the RFID system 100 includes the main gate 10a and the subgate 10b, which are arranged on either side of the passageway PW, the RFID system 100 may be of a non-gated type, with devices including circuits and antennas similar to those of the main gate 10a (i.e., an RFID reader/writer 21 and an RFID antenna 23) located near one side of the passageway PW or the reading area DA.

While the above description states that the antenna switcher 24 is coupled between the RFID reader/writer 21 and the RFID antenna 23, the antenna switcher 24 may be omitted. In this case, the RFID reader/writer 21 detects the RFID tag TG by selectively operating the first antenna member A1(k) and the second antenna member A2(k), which constitute the RFID antenna 23.

The RFID system 100 of the first embodiment described above includes, for reading an RFID tag TG, an RFID reader/writer 21, an RFID antenna 23 connected to the RFID reader/writer 21 , and a controller 22 that controls the RFID reader/writer 21. The RFID antenna 23 includes one or more antenna sets including a first antenna member A1(k) and a second antenna member A2(k). The first and second antenna members A1(k) and A2(k) are arranged adjacent to each other in the passage direction of an RFID tag TG with a diverging angle difference α that causes their boresight directions to diverge from each other anteriorly. The RFID reader/writer 21 processes detection signals retrieved from the RFID tag while selectively operating the first and second antenna members A1(k) and A2(k), and determines whether the RFID tag has passed beside the RFID antenna based on temporal changes in the detection signals.

The aforementioned RFID system 100 performs reading by selectively operating the first and second antenna members A1(k) and A2(k), which are arranged with a diverging angle difference α that causes their boresight directions D1 and D2 to diverge from each other anteriorly. Accordingly, the aforementioned RFID system can ensure a sufficient time difference for temporal changes in signal intensity obtained from the two antenna members A1(k) and A2(k), even when these antenna members A1(k) and A2(k) are placed close to each other. This enhances the accuracy of the process of detecting the passage of the RFID tag TG based on the temporal changes in the detection signals obtained by the two antenna members, thereby ensuring the reliability of the passage detection. It should be noted that positioning the two antenna members A1(k) and A2(k) close together allows the RFID antenna 23 to be compact, which makes the entire apparatus or gate compact.

### [Second Embodiment]

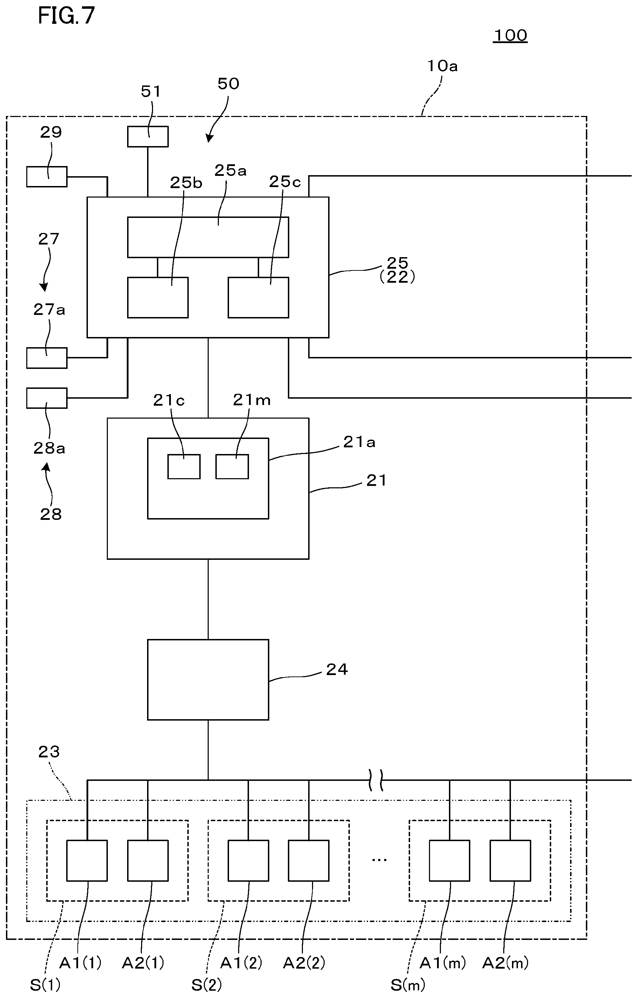

A description is given below of an RFID system according to a second embodiment with reference to FIG. 7. The RFID system according to the second embodiment is a partial modification of the RFID system according to the first embodiment, and identical features are designated by the same reference numerals and will not be described again.

Referring to FIG. 7, a camera 51 is installed in the main gate 10a of RFID system 100, which captures images of the reading area DA, which is located above the passageway PW.

The camera 51, driven by the control device 25, captures images of the reading area DA located above the passageway PW, extracts an image of a person passing through the passageway PW by image processing, and determines whether the person has passed through the passageway PW. In other words, the camera 51 and the control device 25 function as a human detection camera module 50 that detects persons passing through the reading area DA. The RFID system 100 performs the determination based on the combination of the passage detection of the RFID tag TG by the RFID reader/writer 21 and the passage detection by the human detection camera module 50.

The RFID system 100 of the second embodiment, which performs the determination based on the combination of the passage detection of the RFID tag TG and the passage detection of the human detection camera module 50, can improve the detection reliability by secondarily using the passage detection of the human detection camera module 50.

### [Third Embodiment]

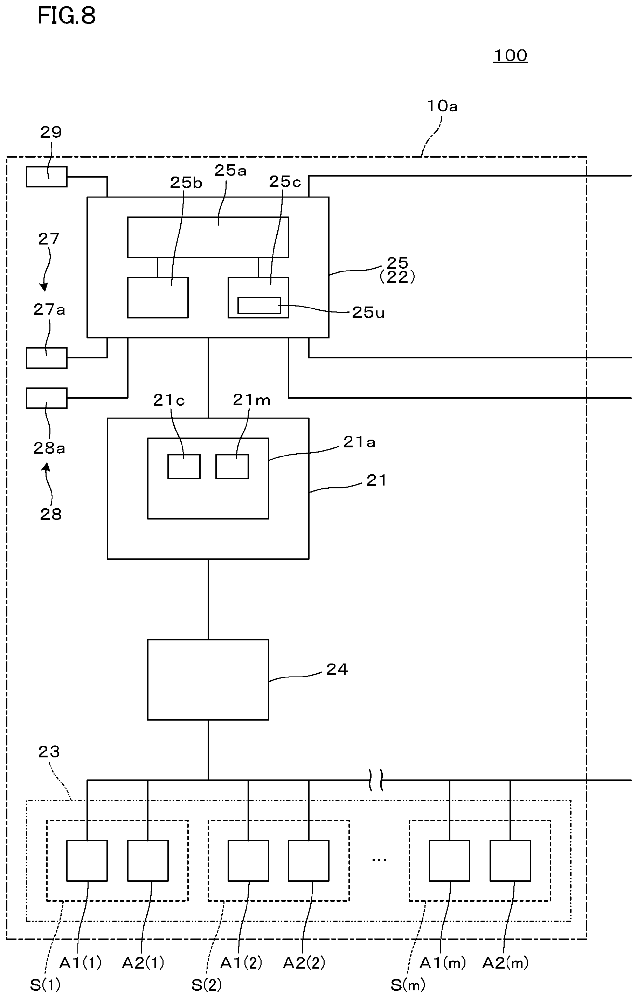

A description is given below of an RFID system according to a third embodiment with reference to FIG. 8. The RFID system according to the third embodiment is a partial modification of the RFID system according to the first embodiment, and identical features are designated by the same reference numerals and will not be described again.

Referring to FIG. 8, the control device 25 incorporates a database 25u in the main gate 10a of the RFID system 100. The database 25u processes and manages unique information regarding the ID or the like of the RFID tag TG, which is retrieved by the RFID reader/writer 21, without accessing a higher-level system. In this scenario, high-speed authentication can be performed by using only the main unit, such as the main gate 10a or similar, eliminating the need for a query request process for authentication to the higher-level management device 30 or the server 70. In other words, high-speed authentication can be performed for the signal retrieved from the RFID tag TG by the RFID reader/writer 21 without accessing a higher-level system or similar.

A standard RFID system 100 requires a higher-level management device 30 for authentication, as authentication-related data is required to be verified by the server 70 via the higher-level management device 30. When the data retrieved by the RFID reader/writer 21 is subjected to verification request processing to the server 70 via the higher-level management device 30 in relation to the authentication, a large data amount causes a problem of an increased time necessary for the verification. Additionally, the software of the higher-level management device 30 is required to adapt to perform this processing, which complicates the higher-level management device 30. In contrast, implementations where the database 25u is integrated into the control device 25 of the main gate 10a and the data stored in the control device 25 is minimized for authentication purposes eliminate the need for verification in the higher-level system when reading the tag and greatly reduce the load imposed on the higher-level system, allowing the RFID system 100 to perform the verification independently.

It should be noted that there are two approaches to integrating the database 25u into the RFID system 100 as follows:
(1) Integrating a simple database.
   Minimum required data is stored in the simple database.
(2) Integrating a complete database.
   The complete database literally stores data equivalent or similar to that in the original database on the server of the higher-level system. In implementations where an LCD display is installed at the main gate 10a to display the retrieved data, data equivalent to that stored in the server of the higher-level system is necessary.

For example, when the RFID system 100 is used for library lending management, by solely storing data indicating that lending processing has been completed in the simplified database 25u, the system is configured to issue an alert for an RFID tag TG attached to a book for which no data is found. When the RFID system 100 is implemented in a retail store, an alarm is triggered for any product bearing an unregistered RFID tag TG as only purchased product data is stored in the simplified database 25u.

The data stored in the simplified database 25u is not limited to whitelist data (data that does not trigger an alert); the stored data may include blacklist data (data that triggers an alert). The simplified database 25u, which stores the whitelist data or blacklist data, is obtained by extracting only the objects for which the passage is permitted or prohibited from the original database. The implementations that integrate the simplified database 25u within the control device 25 can reduce the amount of data stored in the database 25u by storing only the minimum data required for authentication. This enhances the processing speed of the control device 25 since searching a huge database is no longer necessary.

Although not shown, the above-described database 25u may be integrated into the RFID reader/writer 21 instead of the control device 25, or may be integrated as a circuit independent of the control device 25 or the RFID reader/writer 21.

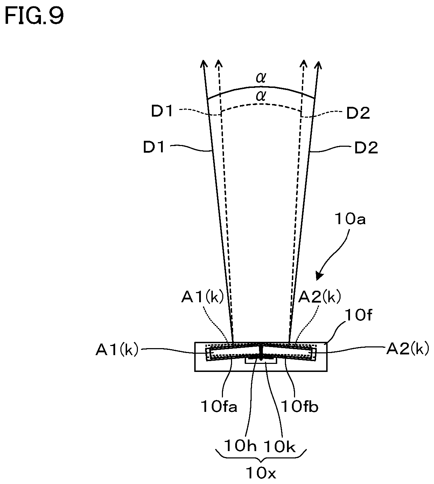

As shown in FIG. 9, the first antenna member A1(k) and the second antenna member A2(k) may be installed in a manner that allows the angle therebetween to be adjusted. A hinge 10h is provided between a frame member 10fa to which the first antenna member A1(k) is attached and a frame member 10fb to which the second antenna member A2(k) is attached, and an angle fixing member 10k is provided in relation to the hinge 10h. The hinge 10h and the angle fixing member 10k function as an angle adjusting member 10x which adjusts the diverging angle difference α. The pair of frame members 10fa and 10fb are housed in the case 10f and can change the angle therebetween. The frame members 10fa and 10fb may be positioned in the state illustrated by the solid or dotted lines, for example. This enables adjustment of the pair of boresight directions D1 and D2, allowing for adjustment to increase or decrease the diverging angle difference α. It should be noted that the time difference, i.e., separation, between the detection peaks PK1 and PK2 shown in FIG. 3B can be adjusted by adjusting the diverging angle difference α.

While the present invention has been specifically described in terms of the above embodiments, the present invention is not limited to the above embodiments. While the RFID system 100 enables management of book checkout or the like in a library, for example, but is not limited to this application.

This application claims priority based on Japanese Patent Application No. 2023-008771, filed on January 24, 2023, the disclosure of which is incorporated herein by reference in its entirety.

## Claims

1. An RFID system, for reading a RFID tag, comprising:
an RFID reader/writer;
an RFID antenna connected to the RFID reader/writer; and
a controller that controls the RFID reader/writer,
wherein the RFID antenna comprises one or more antenna sets comprising a first antenna member and a second antenna member,
wherein the first and second antenna members are arranged adjacent to each other in a passage direction of the RFID tag with a diverging angle difference that causes a pair of boresight directions of the first and second antenna members to diverge from each other anteriorly, and
wherein the RFID reader/writer processes detection signals retrieved from the RFID tag while selectively operating the first and second antenna members, and determines whether the RFID tag has passed beside the RFID antenna based on temporal changes in the detection signals.

2. The RFID system according to claim 1, wherein a sensitivity separation distance is defined as a distance between the antenna sets and a cross point between a half-value angle of radiation characteristics of the first antenna member and a half-value angle of radiation characteristics of the second antenna member, and
wherein the sensitivity separation distance is larger by 20% to 70% than a standard state in which the boresight directions are oriented in the same direction.

3. The RFID system according to claim 1, wherein the RFID reader/writer extracts temporal changes in signal intensity from the detection signals retrieved via the RFID antenna, and determines whether the RFID tag is a tag which has passed beside the RFID antenna by performing filter processing on the signal intensity with respect to passage characteristics, including the signal intensity and a peak index.

4. The RFID system according to claim 3, wherein during the filter processing, the RFID reader/writer reduces a number of stored data of the signal intensity to a number of data points that ensures reliability of the filter processing.

5. The RFID system according to claim 1, wherein the one or more antenna sets of the RFID antenna comprises a plurality of antenna sets beside a reading area, and
wherein the RFID reader/writer is connected to the plurality of antenna sets.

6. The RFID system of claim 5, further comprising an antenna switcher coupled between the RFID reader/writer and the RFID antenna.

7. The RFID system of claim 6, wherein the RFID reader/writer, the RFID antenna, and the antenna switcher are housed in a single housing.

8. The RFID system of claim 1, further comprising an infrared human detection module that detects a person passing through a reading area.
wherein the RFID system makes a determination based on a combination of a passage detection of the RFID tag and a passage detection by the infrared human detection module.

9. The RFID system of claim 1, further comprising a human detection camera module that detects a person passing through a reading area.
wherein the RFID system makes a determination based on a combination of a passage detection of the RFID tag TG and a passage detection by the human detection camera module.

10. The RFID system of claim 1, further comprising a database related to authentication of the RFID tag.

11. The RFID system of claim 10, wherein the database comprises a simplified database obtained by extracting only objects for which passage is permitted or prohibited from an original database.

12. The RFID system of claim 1, further comprising an angle adjusting member which adjust the diverging angle difference.
